# EUROPEAN PATENT SPECIFICATION

(11) **EP 2 947 937 B1**
(45) Date of publication and mention of the grant of the patent: **31.01.2018**
(21) Application number: 13872104.8
(22) Date of filing: 16.01.2013
(51) Int. Cl.: H04L 5/00, H04W 72/04, H04W 52/32, H04W 84/10, H04W 56/00, H04W 72/00, H04W 16/00, H04W 52/24, H04W 52/36, H04W 64/00, H04W 84/04

(54) **BASE STATION DEVICE, COMMUNI CATION METHOD, AND TERMINAL DEVICE**
BASISSTATIONSVORRICHTUNG, KOMMUNIKATIONSVERFAHREN UND ENDGERÄT
DISPOSITIF DE STATION DE BASE, PROCÉDÉ DE COMMUNICATION, ET DISPOSITIF TERMINAL

(43) Date of publication of application: 25.11.2015
(73) Proprietor: Fujitsu Limited, Kawasaki-shi, Kanagawa 211-8588 (JP)
(72) Inventor: OTONARI, Junji, Kawasaki-shi Kanagawa 211-8588 (JP); KIMURA, Dai, Kawasaki-shi Kanagawa 211-8588 (JP)
(74) Representative: Ward, James Norman
(86) International application number: PCT/JP2013/050701
(87) International publication number: WO 2014/112058

(56) References cited:
- JP-A- 2008 017 302
- JP-A- 2011 146 805
- US-A1- 2012 157 154
- INTEL CORPORATION (UK) LTD: "Time domain lightly loaded PDCCH region", 3GPP DRAFT; R1-104375_EICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449726, [retrieved on 2010-08-17]
- KYOCERA: "Range Expansion Performance and Interference Management for Control Channels in Outdoor Hotzone Scenario", 3GPP DRAFT; R1-102363_RE_CCH_OUTHOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419587, [retrieved on 2010-04-06]
- NTT DOCOMO: 'Control channel ICIC for macro- femto deployments' 3GPP, R1-106186 19 November 2010, XP050489636

## Description

### TECHNICAL FIELD

The present invention relates to a base station apparatus, a communications method, and a terminal device.

### BACKGROUND ART

Long Term Evolution (LTE) of the 3rd Generation Partnership Project (3GPP) is a set of specifications for wireless communication (for example, refer to Non-Patent Literature 1 and 2). Under LTE, a downlink control channel (Physical Downlink Control Channel (PDCCH)) is used as a physical channel for sending various types of information from an evolved Node B (eNB) to user terminals (User Equipment (UE)).

Information sent from an eNB to UE by a PDCCH, for example, includes assignment information of radio resources that are downlink data channels (Physical Downlink Shared Channels (PDSCH)) from the eNB to the UE. Information sent from the eNB to the UE by a PDCCH, for example, further includes assignment information of radio resources that are uplink data channels (Physical Uplink Shared Channel (PUSCH)) from the UE to the eNB.

Research concerning heterogeneous networks of small-scale base stations called femtocells, which form small wireless cells and are provided in general households and offices, is advancing for wireless communications systems such as recent mobile telephone networks.

Non-Patent Literature 1: 3GPP TS36.211 V9.1.0
Non-Patent Literature 2: 3GPP TS36.213 V9.3.0

INTEL CORPORATION (UK) LTD, "Time domain lightly loaded PDCCH region" discloses examples of time domain extension of a lightly loaded PDCCH region and how time domain ICIC can be viewed as one special example of time domain lightly loaded PDCCH region.

US2012157154 (A1) discloses a method and an apparatus for controlling transmission power in a femto base station. The method includes: predicting femto base station interference to be given from an adjacent femto base station to a terminal; predicting macro base station interference to be given from a macro base station to the terminal; determining transmission power for the terminal; and transmitting a downlink signal to the terminal on the basis of the transmission power, wherein the femto base station interference is predicted on the basis of a distance between serving femto base station and the adjacent femto base station and the transmission power of the adjacent femto base station, and the macro base station interference is predicted on the basis of a distance between serving femto base station and the macro base station and the transmission power of the macro base station.

### DISCLOSURE OF INVENTION

### PROBLEM TO BE SOLVED BY THE INVENTION

Nonetheless, with the conventional technique above, when a femto base station apparatus is provided near a macro base station apparatus, terminal devices that connect to the femto base station apparatus are susceptible to interference from the macro base station apparatus and the quality of communication may drop.

To solve the problems associated with the conventional technique, one object of the present invention is to provide a base station apparatus, a communications method, and a terminal device that can suppress drops in communication quality.

### MEANS FOR SOLVING PROBLEM

The present invention is defined by the appended independent claims, to which reference should now be made. Specific embodiments are defined in the dependent claims.

To solve the problems above and achieve an object, a base station apparatus, a communications method, and a terminal apparatus are proposed where at the base station apparatus capable of simultaneously transmitting a plurality of control channels by frequency division multiplexing, distance information indicating a distance between the base station apparatus and another base station apparatus is obtained; an upper limit count for the plurality of control channels to be transmitted simultaneously to the terminal device connected to the base station apparatus is configured based on the distance indicated by the obtained distance information; and the plurality of control channels are transmitted to the terminal device, based on the configured upper limit count.

### EFFECT OF THE INVENTION

According to one aspect of the present invention, an effect is achieved in that drops in communication quality can be suppressed.

### BRIEF DESCRIPTION OF DRAWINGS

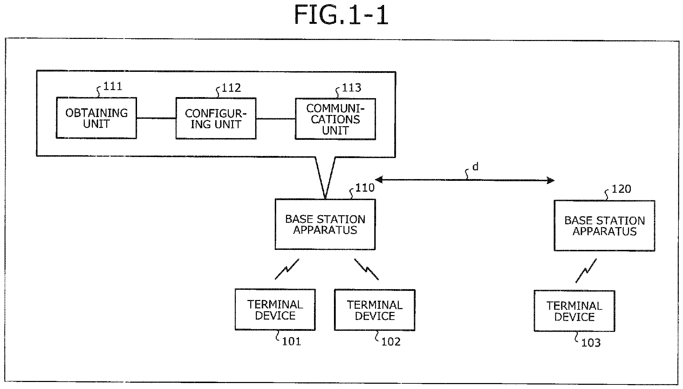

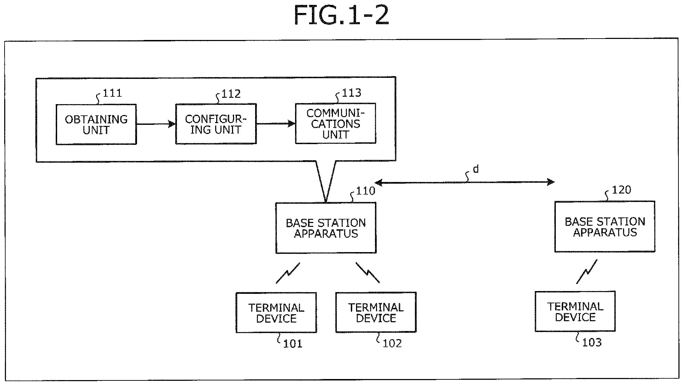

FIG. 1-1 is a diagram depicting an example of a base station apparatus according to an embodiment;
FIG. 1-2 is a diagram depicting an example of signal flow in the base station apparatus depicted in FIG. 1-1;
FIG. 2 is a diagram depicting an example of a communications system to which the base station apparatus according to the embodiment is applied;
FIG. 3 is a diagram depicting an example of a downlink subframe format;
FIG. 4-1 is a diagram depicting an example of a configuration of a femto base station apparatus;
FIG. 4-2 is a diagram depicting an example of a configuration of a terminal device;
FIG. 5-1 is a diagram depicting an example of hardware configuration of the femto base station apparatus;
FIG. 5-2 is a diagram depicting an example of hardware configuration of the terminal device;
FIG. 6 is a flowchart of an example of operations by the femto base station;
FIG. 7 is a flowchart of an example of a changing process for a simultaneous-transmission count limit in a case where the femto base station apparatus and another base station apparatus are close to one another;
FIG. 8 is a flowchart of another example of operations by the femto base station;
FIG. 9 is a flowchart of an example of the changing process for the simultaneous-transmission count limit in a case where the femto base station apparatus and another base station apparatus are far from one another;
FIG. 10-1 is a diagram depicting an example of downlink victim interference before lowering of the upper limit of the simultaneous-transmission count;
FIG. 10-2 is a diagram depicting an example of downlink victim interference after lowering of the upper limit of the simultaneous-transmission count;
FIG. 11-1 is a diagram depicting an example of downlink source interference before lowering of the upper limit of the simultaneous-transmission count; and
FIG. 11-2 is a diagram depicting an example of downlink source interference after lowering of the upper limit of the simultaneous-transmission count.

### BEST MODE(S) FOR CARRYING OUT THE INVENTION

Embodiments of a base station apparatus, a communications method, and a terminal device according to the present invention will be described in detail with reference to the accompanying drawings.

### (Embodiment)

### (Base station apparatus according to embodiment)

FIG. 1-1 is a diagram depicting an example of a base station apparatus according to the embodiment. FIG. 1-2 is a diagram depicting an example of signal flow in the base station apparatus depicted in FIG. 1-1. Terminal devices 101, 102 depicted in FIGs. 1-1 and 1-2 are wireless terminals connected to a base station apparatus 110 according to the embodiment. A terminal device 103 is a wireless terminal connected to a base station apparatus 120 that is different from the base station apparatus 110. The base station apparatus 120, for example, is a macro base station or a femto base station in a vicinity of the base station apparatus 110.

The base station apparatus 110 according to the embodiment wirelessly communicates with the terminal devices 101, 102. Further, the base station apparatus 110 is a base station apparatus capable of simultaneously transmitting plural control channels to the terminal devices 101, 102 by frequency division multiplexing. The base station apparatus 110 includes an obtaining unit 111, a configuring unit 112, and a communications unit 113.

The obtaining unit 111 obtains distance information indicating a distance d between the base station apparatus 110 (thereof) and the base station apparatus 120. The obtaining unit 111 outputs the obtained distance information to the configuring unit 112. For example, distance information is stored in memory of the base station apparatus 110 and the obtaining unit 111 obtains the distance information from the memory of the base station apparatus 110.

Alternatively, the obtaining unit 111 may obtain the distance information by receiving the distance information from another communications apparatus (e.g., a higher order apparatus). Further, the obtaining unit 111 may obtain the distance information by a calculation based on obtained positions of the base station apparatus 110 and the base station apparatus 120. The obtaining unit 111 may obtain the distance information based on wireless signal reception strength and/or propagation loss at the base station apparatus 110, for wireless signals from the base station apparatus 120. The obtaining unit 111 may obtain the distance information based on signal reception at the terminal devices 101, 102, for signals from the base station apparatus 110 and the base station apparatus 120.

The configuring unit 112 determines if the distance indicated by the distance information output from the obtaining unit 111 is greater than or equal to a first given value. If the distance indicated by the distance information is greater than or equal to the first given value, the configuring unit 112 configures, as a given first upper limit count, an upper limit count of the control channels to be transmitted simultaneously to terminal device (e.g., the terminal devices 101, 102) connected to the base station apparatus 110.

If the distance indicated by the distance information is less than the first given value, the configuring unit 112 configures, as a given second upper limit count, an upper limit count of the control channels to be transmitted simultaneously to terminal devices connected to the base station 110. The second upper limit count is an upper limit count that is less than the first upper limit count. The configuring unit 112 notifies the communications unit 113 of the configured upper limit count.

The communications unit 113 transmits based on the upper limit count notified by the configuring unit 112, control channels to the terminal devices 101, 102 connected to the base station apparatus 110. For example, the communications unit 113 performs scheduling such that for the transmission of control channels to the terminal devices 101, 102, a count of the control channels assigned to the same time resource does not exceed the upper limit count notified by the configuring unit 112, and based on a result of the scheduling, the communications unit 113 transmits control signals to the terminal devices 101, 102.

Further, for example, the communications unit 113 controls the transmission power of the control channels such that the total transmission power of the control channels transmitted simultaneously is a given power or less. Therefore, when few control channels are transmitted simultaneously, the transmission power of a single control channel becomes large, affording less vulnerability to interference from other cells.

As described, when the base station apparatus 110 and the base station apparatus 120 are close to one another, the upper limit count of the control channels simultaneously transmitted to the terminal devices 101, 102 can be reduced to increase the transmission power of the control channels. Thus, the effect of interference from the base station apparatus 120 on control signals from the base station apparatus 110 to the terminal devices 101, 102 can be reduced. Consequently, drops in the quality of communication between the base station apparatus 110 and the terminal devices 101, 102 due to interference from the base station apparatus 120 can be suppressed.

The configuring unit 112 may configure, as a third upper limit count, the upper limit count of the control channels simultaneously transmitted to terminal devices connected to the base station apparatus 110, when the distance indicated by the distance information is greater than or equal to a second given value that is greater than the first given value. The third upper limit count is an upper limit count that is less than the first upper limit count. Further, the third upper limit count may be the same as or may differ from the second upper limit count.

Thus, when the base station apparatus 110 and the base station apparatus 120 are far from one another, the upper limit count of the control channels simultaneously transmitted to the terminal devices 101, 102 can be reduced. Therefore, the frequency of collision of control signals from the base station apparatus 110 with control signals from the base station apparatus 120 to the terminal device 103 can be reduced. As a result, drops in the quality of communication between the base station apparatus 120 and the terminal device 103 due to interference from the base station apparatus 110 can be suppressed.

Further, the communications unit 113 may synchronize the transmission timing of control signals with the base station apparatus 120, when the distance indicated by the distance information is greater than or equal to the second given value. Thus, collisions of downlink data signals from the base station apparatus 110 to the terminal device 101 or the terminal device 102 with control signals from the base station apparatus 120 to the terminal device 103 can be prevented. As a result, drops in the quality of communication between the base station apparatus 120 and the terminal device 103 due to interference from the base station apparatus 110 can be suppressed.

### (Communications system to which base station apparatus according to embodiment is applied)

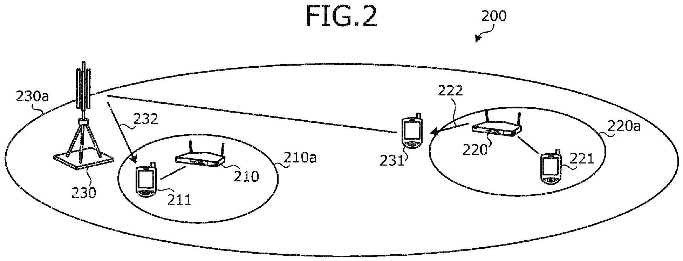

FIG. 2 is a diagram depicting an example of a communications system to which the base station apparatus according to the embodiment is applied. In FIG. 2, an example of application to a heterogeneous network of macro cells and femto cells will be described as one example.

A communications system 200 depicted in FIG. 2 is a heterogeneous network that includes a femto base station apparatus 210, a femto base station apparatus 220, and a macro base station apparatus 230. A femto cell 210a of the femto base station apparatus 210 and a femto cell 220a of the femto base station apparatus 220 are included in a macro cell 230a of the macro base station apparatus 230.

A femto cell connected terminal device 211 is in the femto cell 210a and connected to the femto base station apparatus 210. A femto cell connected terminal device 221 is in the femto cell 220a and connected to the femto base station apparatus 220. A macro cell connected terminal device 231 is in the macro cell 230a and connected to the macro base station apparatus 230. Further, although the macro cell connected terminal device 231 is located near the femto base station apparatus 220, the macro cell connected terminal device 231 is not connected to the femto base station apparatus 220.

The base station apparatus 110 depicted in FIGs. 1-1 and 1-2, for example, is applicable to the femto base station apparatus 210. Since the distance between the femto base station apparatus 210 and the macro base station apparatus 230 is small, interference 232 from the macro base station apparatus 230, on the PDCCH from the femto base station apparatus 210 to the femto cell connected terminal device 211 is large.

In contrast, since the distance is small between the femto base station apparatus 210 to which the base station apparatus 110 depicted in FIGs. 1-1 and 1-2 is applied and the macro base station apparatus 230, the upper limit count of the PDCCHs simultaneously transmitted from the femto base station apparatus 210 is reduced. As a result, the adjustment range of the transmission power of the PDCCHs from the femto base station apparatus 210 is expanded, enabling the transmission power of the PDCCHs to be increased. Consequently, the effect of the interference 232 from the macro base station apparatus 230, on the PDCCHs from the femto base station apparatus 210 is reduced, enabling improved communication quality between the femto base station apparatus 210 and the femto cell connected terminal device 211.

The base station apparatus 110 depicted in FIGs. 1-1 and 1-2 is further applicable to the femto base station apparatus 220. Since the distance between the femto base station apparatus 220 and the macro base station apparatus 230 is large, the macro cell connected terminal device 231 located near the femto base station apparatus 220 becomes victim UE affected by interference 222 from the femto base station apparatus 220.

Thus, since the distance is large between the femto base station apparatus 220 to which the base station apparatus 110 depicted in FIGs. 1-1 and 1-2 is applied and the macro base station apparatus 230, the upper limit count of the PDCCHs simultaneously transmitted from the femto base station apparatus 220 is reduced. As a result, the number of PDCCHs simultaneously transmitted from the femto base station apparatus 220 is reduced, enabling a reduction in the frequency of collisions of the PDCCHs from the femto base station apparatus 220 with the downlink control channels from the macro base station apparatus 230 to the macro cell connected terminal device 231.

The femto base station apparatus 220 may synchronize the transmission timing of the downlink control channels with the macro base station apparatus 230. As a result, the frequency of collisions of the PDCCHs from the femto base station apparatus 220 with the downlink control channels from the macro base station apparatus 230 can be reduced.

### (Downlink subframe format)

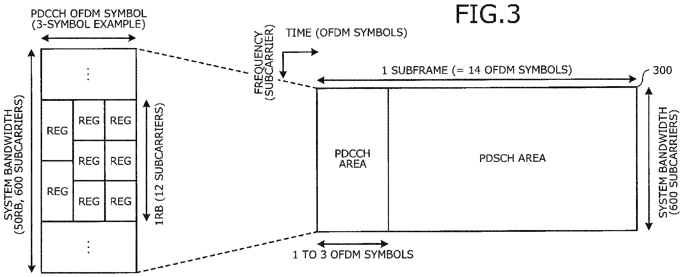

FIG. 3 is a diagram depicting an example of a downlink subframe format. In FIG. 3, a downlink subframe format 300 (system bandwidth 10 [MHz]) under LTE is depicted as one example. Resource assignment in respective PDCCH areas of the UE, for example, is performed in units of Control Channel Elements (CCE).

A CCE count of CCEs assigned to a single UE is, for example, any one among 1, 2, 4, and 8; and a CCE count of CCEs to be assigned corresponding to the downlink propagation quality between the UE and the eNB indicated by the Channel Quality Indicator (CQI) is determined. In other words, the lower the downlink communication quality is for the UE, the more CCEs are assigned, thereby ensuring the communication quality of the PDCCH.

### (Femto base station apparatus configuration)

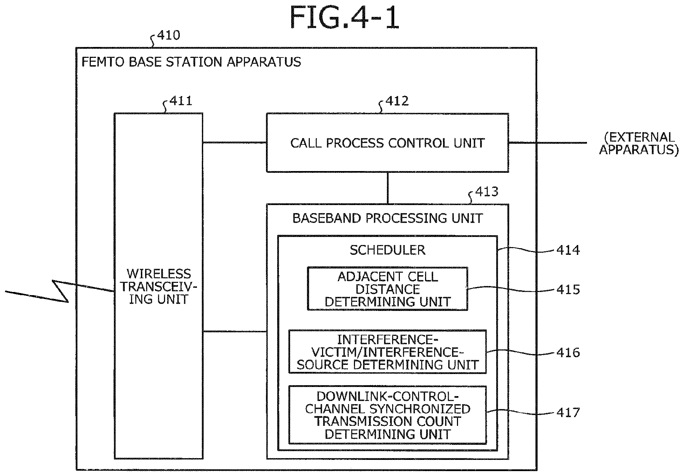

FIG. 4-1 is a diagram depicting an example of a configuration of the femto base station apparatus. The femto base station apparatuses 210, 220 depicted in FIG. 2 respectively, for example, can be realized by a femto base station apparatus 410 depicted in FIG. 4-1. The femto base station apparatus 410 includes a wireless transceiving unit 411, a call process control unit 412, and a baseband processing unit 413.

The wireless transceiving unit 411 transmits and receives wireless signals with respect to terminal devices (e.g., the femto cell connected terminal devices 211, 221). The call process control unit 412 performs call process control of a termination process, etc. of messages (RRC message) when communication is performed with a terminal device.

The baseband processing unit 413 performs baseband signal processing of generating baseband signals for communicating with wireless terminals. For example, the baseband processing unit 413 has a scheduler 414.

The scheduler 414 performs scheduling for plural user terminal devices. For example, when channel resources are shared among plural users such as in an LTE system, the scheduler 414 performs temporal and frequency resource assignment.

The scheduler 414 has an adjacent cell distance determining unit 415, an interference-victim/interference-source determining unit 416, and a downlink-control-channel synchronized transmission count determining unit 417, thereby enabling adjustment of a simultaneous-transmission count for the downlink control channels.

The adjacent cell distance determining unit 415 obtains distance information that indicates the distance between the femto base station apparatus 410 and other base station apparatuses (e.g., the macro base station 230) near the femto base station apparatus 410. For example, the adjacent cell distance determining unit 415 can obtain position information by directly obtaining actual position information from a higher order apparatus.

Alternatively, the adjacent cell distance determining unit 415 may obtain distance information that indicates the distance in terms of radio waves based on reception power strength, propagation loss, etc. from each cell and measured by the femto base station apparatus 410 or terminal devices connected to the femto base station apparatus 410. Further, the adjacent cell distance determining unit 415 compares the distance indicated by the obtained distance information and a threshold to determine the magnitude of the distance between the femto base station apparatus 410 and other base station apparatuses.

The interference-victim/interference-source determining unit 416 obtains quality information that indicates the communication quality of a PDCCH between the femto base station apparatus 410 and a terminal device 420. The communication quality of a PDCCH, for example, is signal to interference and noise ratio (SINR).

The interference-victim/interference-source determining unit 416 compares the communication quality indicated by the obtained quality information and a given value to determine the magnitude of downlink interference from other base stations, in the cell of femto base station apparatus 410. For example, the interference-victim/interference-source determining unit 416 compares the lowest SINR among SINRs of wireless terminals connected to the femto base station apparatus 410 and a given value.

Further, the interference-victim/interference-source determining unit 416 determines whether a terminal device (victim UE) is present that is subject to interference by a PDCCH from the femto base station apparatus 410 and is not connected to the femto base station apparatus 410. For example, the interference-victim/interference-source determining unit 416 obtains interference information that indicates an interference level (uplink interference) for uplink signals to the base station apparatus 110 and compares the obtained interference level and a threshold to determine whether victim UE is present.

The downlink-control-channel synchronized transmission count determining unit 417 determines based on determination results obtained respectively by the scheduler 414 and the adjacent cell distance determining unit 415, an upper limit count of PDCCHs to be simultaneously transmitted from the femto base station apparatus 410. The scheduler 414 performs scheduling based on the upper limit count determined by the downlink-control-channel synchronized transmission count determining unit 417.

The obtaining unit 111 depicted in FIGs. 1-1 and 1-2, for example, can be realized by the adjacent cell distance determining unit 415. The configuring unit 112 depicted in FIGs. 1-1 and 1-2, for example, can be realized by the downlink-control-channel synchronized transmission count determining unit 417. The communications unit 113 depicted in FIGs. 1-1 and 1-2, for example, can be realized by the adjacent cell distance determining unit 415 and the wireless transceiving unit 411.

### (Terminal device configuration)

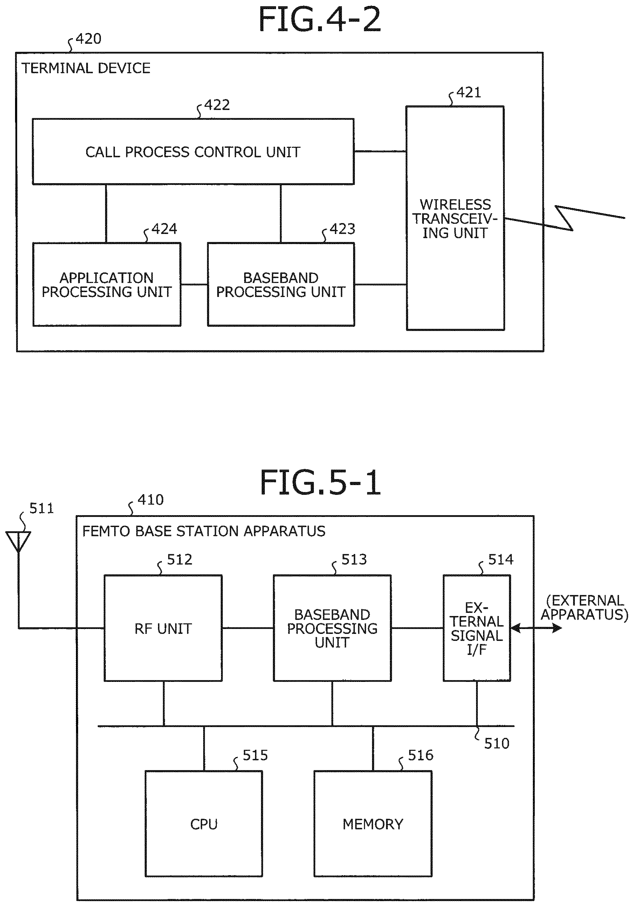

FIG. 4-2 is a diagram depicting an example of a configuration of a terminal device. The femto cell connected terminal devices 211, 221 depicted in FIG. 2, for example, can be realized respectively by the terminal device 420 depicted in FIG. 4-2. The terminal device 420 includes a wireless transceiving unit 421, a call process control unit 422, a baseband processing unit 423, and an application processing unit 424.

The wireless transceiving unit 421 transmits and receives wireless signals with respect to base station apparatuses (e.g., the femto base station apparatuses 210, 220). For example, the wireless transceiving unit 421 demodulates received signals according to a modulation scheme or a communication scheme corresponding to transmission parameters (modulation scheme, communication scheme, etc.) configured on the base station apparatus side. The call process control unit 422 performs call process control of a termination process, etc. of messages (RRC Message) when communication is performed with a base station apparatus.

The baseband processing unit 423 performs baseband signal processing, such as demodulation processing, of received baseband signals according to a transmission parameter notified by a base station apparatus. The application processing unit 424 executes various types of processes based on the received signal after modulation by the baseband processing unit 423.

### (Hardware configuration of femto base station apparatus)

FIG. 5-1 is a diagram depicting an example of hardware configuration of the femto base station apparatus. As depicted in FIG. 5-1, the femto base station apparatus 410, for example, includes an antenna 511, an RF unit 512, a baseband processing unit 513, an external signal I/F 514, a CPU 515, and memory 516. The RF unit 512, the baseband processing unit 513, the external signal I/F 514, the CPU 515, and the memory 516 are connected by a bus 510.

The antenna 511 transmits and receives wireless signals. The RF unit 512 converts signals received by the antenna 511, from a high frequency bandwidth to a baseband width. The RF unit 512 further converts signals to be transmitted from the antenna 511, from the baseband width to a high frequency bandwidth. The RF unit 512 is controlled by the CPU 515.

The baseband processing unit 513 performs baseband signal processing. For example, the baseband processing unit 513 performs termination or communication protocol translation, etc. for transmitted/received signals. The baseband processing unit 513, for example, is a digital signal processor such as a Field Programmable Gate Array (FPGA). The baseband processing unit 513 is controlled by the CPU 515.

The external signal I/F 514 is a communications interface that transmits and receives signals with respect to an apparatus (external apparatus) of an external network. The external signal I/F 514 is controlled by the CPU 515.

The CPU 515 is a processor that governs overall control of the femto base station apparatus 410. The memory 516, for example, includes main memory and auxiliary memory. The main memory, for example, is random access memory (RAM). The main memory is further used as a work area of the CPU 515. The auxiliary memory, for example, is non-volatile memory such as a magnetic disk, an optical disk, flash memory, etc. The auxiliary memory stores various types of programs that operate the femto base station apparatus 410. Programs stored in the auxiliary memory are loaded onto the main memory and executed by the CPU 515.

The wireless transceiving unit 411 depicted in FIG. 4-1, for example, is realized by the antenna 511, the RF unit 512, and the CPU 515. The call process control unit 412 depicted in FIG. 4-1, for example, is realized by the CPU 515. The baseband processing unit 413 depicted in FIG. 4-1, for example, is realized by the baseband processing unit 513 and the CPU 515.

### (Hardware configuration of terminal device)

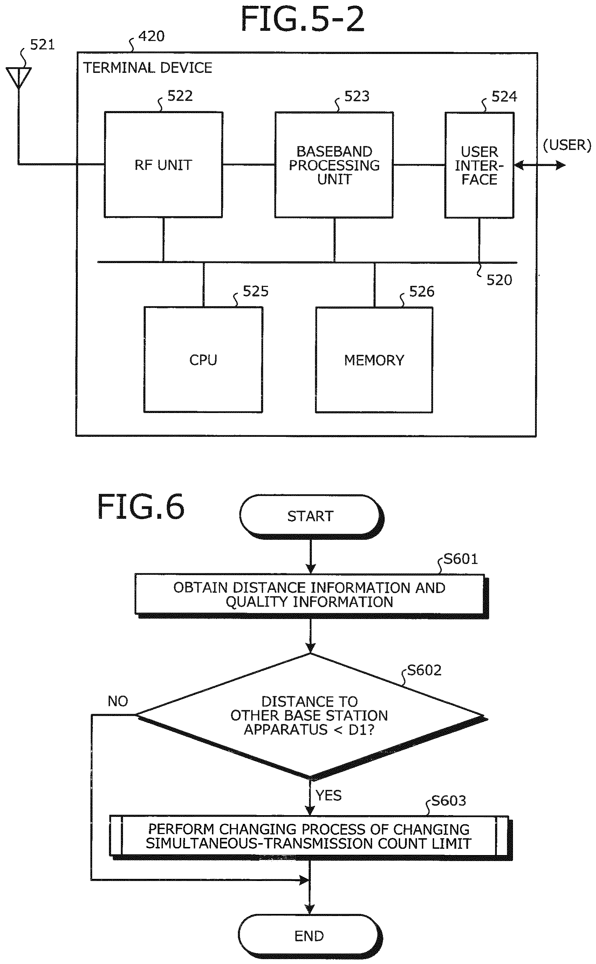

FIG. 5-2 is a diagram depicting an example of hardware configuration of the terminal device. As depicted in FIG. 5-2, the terminal device 420, for example, includes an antenna 521, an RF unit 522, a baseband processing unit 523, a user interface 524, a CPU 525, and memory 526. The RF unit 522, the baseband processing unit 523, the user interface 524, the CPU 525, and the memory 526 are connected by a bus 520.

The antenna 521 transmits and receives wireless signals. The RF unit 522 converts signals received by the antenna 521, from a high frequency bandwidth to a baseband width. The RF unit 522 further converts signals to be transmitted from the antenna 521, from the baseband width to a high frequency bandwidth. The RF unit 522 is controlled by the CPU 525.

The baseband processing unit 523 performs baseband signal processing. For example, the baseband processing unit 523 performs termination or communication protocol translation, etc. for transmitted/received signals. The baseband processing unit 523, for example, is a digital processor such as a FPGA. The baseband processing unit 523 is controlled by the CPU 525.

The user interface 524, for example, is an interface that includes an input device that receives operational input from the user, an output device that outputs information to the user, etc. The input device, for example, can be realized by keys (e.g., keyboard), a remote controller, etc. The output device, for example, can be realized by a display, a speaker, etc. Further, the input device and output device may be realized by a touch panel. The user interface 524 is controlled by the CPU 525.

The CPU 525 is a processor that governs overall control of the terminal device 420. The memory 526, for example, includes main memory and auxiliary memory. The main memory, for example, is RAM. The main memory is further used as a work area of the CPU 525. The auxiliary memory, for example, is non-volatile memory such as a magnetic disk and flash memory. The auxiliary memory stores various types of programs that operate the terminal device 420. Programs stored in the auxiliary memory are loaded to the main memory and executed by the CPU 525.

The wireless transceiving unit 421 depicted in FIG. 4-2, for example, can be realized by the antenna 521, the RF unit 522, and the CPU 525. The call process control unit 422 depicted in FIG. 4-2, for example, can be realized by the CPU 525. The baseband processing unit 423 and the application processing unit 424 depicted in FIG. 4-2, for example, can be realized by the baseband processing unit 523 and the CPU 525.

### (Operations by femto base station)

An example of operations of the femto base station apparatus 410 will be described. The femto base station apparatus 410 is assumed to be able to configure the upper limit of a simultaneous-transmission count for PDCCHs as any one among UL_low and UL_high. UL_low is a count that is lower than UL_high. Further, the femto base station apparatus 410 is assumed to configure an initial value of the upper limit of the simultaneous-transmission count for PDCCHs as, for example, UL_high.

FIG. 6 is a flowchart of an example of operations by the femto base station. The femto base station apparatus 410, for example, executes the following steps. The femto base station apparatus 410 obtains distance information that indicates the distance between the femto base station apparatus 410 and other base station apparatuses (e.g., the macro base station apparatus 230) and quality information that indicates the communication quality of a PDCCH between the femto base station apparatus 410 and the terminal device 420 (step S601).

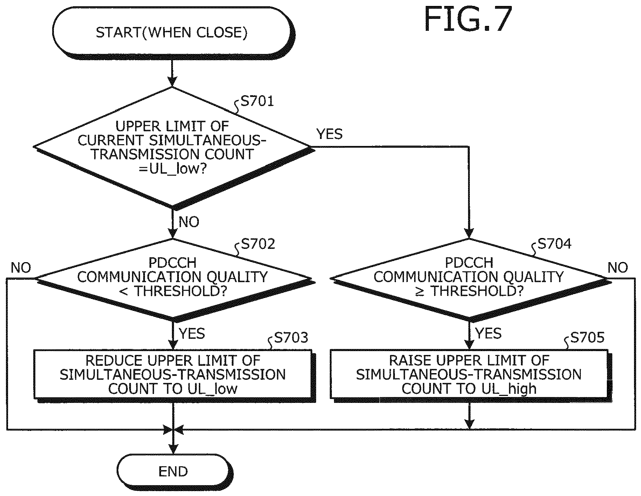

The femto base station apparatus 410 determines based on the distance information obtained at step S601, whether the distance to another base station apparatus is less than a given value D1 (first given value) (step S602). If the distance to the other base station apparatus is less than D1 (step S602: YES), the femto base station apparatus 410 performs a changing process of changing the simultaneous-transmission count limit for the PDCCHs (step S603), and ends a series of the operations. The changing process for the simultaneous-transmission count limit in this case will be described hereinafter (for example, refer to FIG. 7).

At step S602, if the distance to the other base station apparatus is greater than or equal to D1 (step S602: NO), the femto base station apparatus 410 ends an updating operation without performing the changing process for the simultaneous-transmission count limit.

The femto base station apparatus 410 executes the above operations cyclically, for example. Alternatively, the femto base station apparatus 410 may execute the above steps consequent to a change in the number of terminal devices that are connected to the femto base station apparatus 410 and have a low communication quality.

FIG. 7 is a flowchart of an example of the changing process for the simultaneous-transmission count limit in a case where the femto base station apparatus and another base station apparatus are close to one another. The femto base station apparatus 410, for example, executes the following steps as the changing process for the simultaneous-transmission count limit at step S603 depicted in FIG. 6.

The femto base station apparatus 410 determines whether the upper limit of the current simultaneous-transmission count for the PDCCHs is UL_low (step S701). If the upper limit of the current simultaneous-transmission count is not UL_low (step S701: NO), the femto base station apparatus 410 determines based on the quality information obtained at step S601 in FIG. 6, whether PDCCH communication quality is less than a threshold (step S702).

At step S702, if the PDCCH communication quality is less than the threshold (step S702: YES), the femto base station apparatus 410 reduces the upper limit of the simultaneous-transmission count to UL_low (step S703), and ends the changing process. If the PDCCH communication quality is greater than or equal to the threshold (step S702: NO), the femto base station apparatus 410 ends the changing process without changing the upper limit of the simultaneous-transmission count.

At step S701, if the upper limit of the current simultaneous-transmission count is UL_low (step S701: YES), the femto base station apparatus 410 determines based on the quality information obtained at step S601 in FIG. 6, if the PDCCH communication quality is greater than or quality to a threshold (step S704).

At step S704, if the PDCCH communication quality is less than the threshold (step S704: NO), the femto base station apparatus 410 ends the changing process without changing the upper limit pf the simultaneous-transmission count. If the PDCCH communication quality is greater than or equal to the threshold (step S704: YES), the femto base station apparatus 410 raises the upper limit of the simultaneous-transmission count to UL_high (step S705), and ends the changing process.

By the steps depicted in FIGs. 6 and 7, when the distance between the femto base station apparatus 410 and another base station apparatus is close, the upper limit of the simultaneous-transmission count for PDCCHs can be reduced. As a result, the transmission power can be raised (Power Boosting), enabling drops in the PDCCH communication quality consequent to interference from another base station apparatus to be suppressed.

Furthermore, even when the femto base station apparatus 410 and another base station apparatus are close to one another and the PDCCH communication quality is not low, configuration is enabled where the upper limit of the simultaneous-transmission count for PDCCHs is not reduced. After the upper limit of the simultaneous-transmission count for PDCCHs has been lowered, if the communication quality for PDCCHs becomes high, the upper limit of the simultaneous-transmission count for PDCCHs can be raised. As a result, even in a state enabling the PDCCH communication quality to be maintained, drops in communication efficiency consequent to lowering the upper limit of the simultaneous-transmission count for the PDCCHs can be prevented.

### (Another example of operations by femto base station)

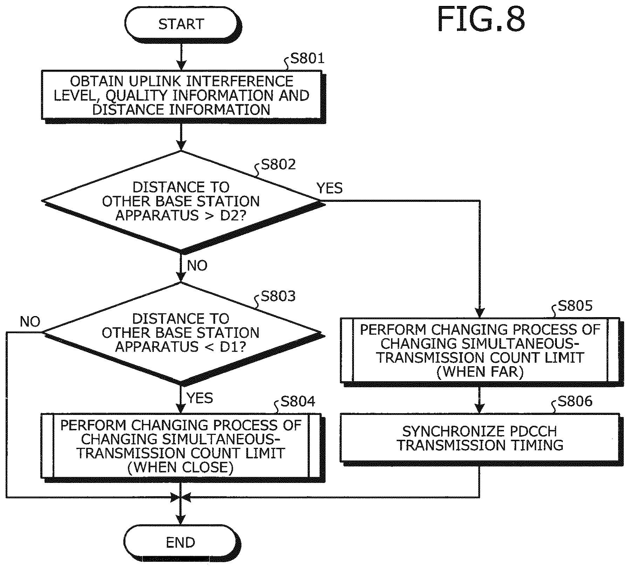

FIG. 8 is a flowchart of another example of operations by the femto base station. The femto base station apparatus 410, for example, may execute the following steps. The femto base station apparatus 410 obtains the uplink interference level, quality information indicating the communication quality of PDCCHs between the femto base station apparatus 410 and the terminal device 420, and distance information indicating the distance between the femto base station apparatus 410 and another base station apparatus (e.g., the macro base station apparatus 230) (step S801).

The femto base station apparatus 410 determines based on the distance information obtained at step S801, whether the distance to the other base station apparatus is greater than a given value D2 (second given value) (step S802). D2 is a value greater than D1. If the distance to the other base station apparatus is less than or equal to D2 (step S802: NO), the femto base station apparatus 410 transitions to step S803. Operations at steps S803 and S804 depicted in FIG. 8 are the same as those at steps S602 and S603 depicted in FIG. 6.

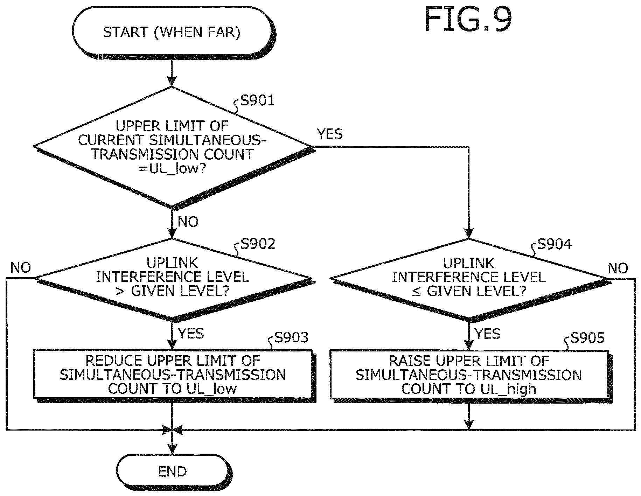

At step S802, if the distance to the other base station apparatus is greater than D2 (step S802: YES), the femto base station apparatus 410 performs the changing process of changing the simultaneous-transmission count limit for the PDCCHs (step S805). The changing process for the simultaneous-transmission count limit in this case will be described hereinafter (for example, refer to FIG. 9).

The femto base station apparatus 410 synchronizes the PDCCH transmission timing with the other base station apparatus (e.g., the macro base station apparatus 230) (step S806), and ends a series of the operations. The synchronization at step S806, for example, can be performed by a correction of the time using a Global Positioning System (GPS) or network synchronization.

The femto base station apparatus 410 executes the above steps cyclically, for example. Alternatively, the femto base station apparatus 410 may execute the above steps consequent to a change in the number of victim UE and/or terminal devices that are connected to the femto base station apparatus 410 and have a low communication quality.

FIG. 9 is a flowchart of an example of the changing process for the simultaneous-transmission count limit in a case where the femto base station apparatus and another base station apparatus are far from one another. As the changing process for the simultaneous-transmission count limit at step S805 depicted in FIG. 8, the femto base station apparatus 410 executes the following steps, for example.

The femto base station apparatus 410 determines whether the upper limit of the current simultaneous-transmission count for the PDCCHs is UL_low (step S901). If the upper limit of the simultaneous-transmission count is not UL_low (step S901: NO), the femto base station apparatus 410 determines whether the uplink interference level obtained at step S801 in FIG. 8 is greater than a given level (step S902).

At step S902, if the uplink interference level is greater than the given level (step S902: YES), the femto base station apparatus 410 lowers the upper limit of the simultaneous-transmission count to UL_low (step S903), and ends the changing process. If the uplink interference level is less than or equal to the given level (step S902: NO), the femto base station apparatus 410 ends the changing process without changing the upper limit of the simultaneous-transmission count.

At step S901, if the upper limit of the current simultaneous-transmission count is UL_low (step S901: YES), the femto base station apparatus 410 determines based on the quality information obtained at step S601 in FIG. 6, if the uplink interference level is less than or equal to the given level (step S904).

At step S904, if the uplink interference level is greater than the given level (step S904: NO), the femto base station apparatus 410 ends the changing process without changing the upper limit of the simultaneous-transmission count. If the uplink interference level is less than or equal to the given level (step S904: YES), the femto base station apparatus 410 raises the upper limit of the simultaneous-transmission count to UL_high (step S905), and ends the changing process.

By the steps depicted in FIGs. 7 to 9, when the distance between the femto base station apparatus 410 and another base station apparatus is far, the upper limit of the simultaneous-transmission count for the PDCCHs can be lowered. As a result, the frequency of collisions of downlink control channels from other base station apparatuses with the PDCCHs from the femto base station apparatus 210 are reduced, enabling drops in the communication quality of the downlink control channels from other base station apparatuses to be suppressed.

Further, even when the femto base station apparatus 410 and another base station apparatus are far from one another, if the uplink interference level is low, configuration is enabled where the upper limit of the simultaneous-transmission count for the PDCCHs is not lowered. As a result, even in a state where there is no terminal device subject to interference by the PDCCHs from the femto base station apparatus 210, drops in communication efficiency consequent to lowering the upper limit of the simultaneous-transmission count for the PDCCHs can be prevented.

After the upper limit of the simultaneous-transmission count for the PDCCHs has been lowered, if the uplink interference level has become low, the upper limit of the simultaneous-transmission count for the PDCCHs can be raised. As a result, even in a state enabling the PDCCH communication quality to be maintained, drops in communication efficiency consequent to lowering of the upper limit of the simultaneous-transmission count for the PDCCHs can be prevented.

### (Downlink victim interference before lowering of upper limit of simultaneous-transmission count)

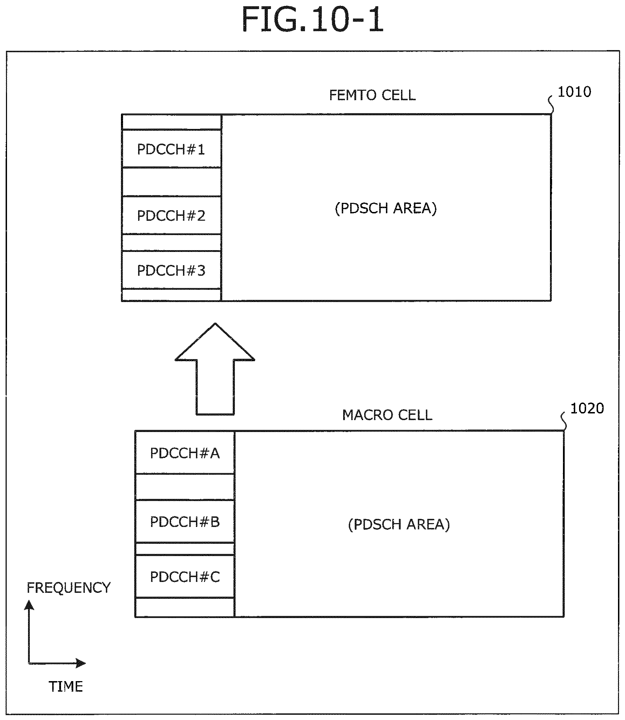

FIG. 10-1 is a diagram depicting an example of downlink victim interference before lowering of the upper limit of the simultaneous-transmission count. In FIG. 10-1, the horizontal axis represents time and the vertical axis represents frequency. A radio resource 1010 (femto cell) represents a radio resource of a downlink signal of the femto base station apparatus 210. A radio resource 1020 (macro cell) represents a radio resource of a downlink signal of the macro base station apparatus 230.

The radio resource 1010 depicted in FIG. 10-1 includes areas of PDCCHs #1 to #3, and a PDSCH. PDCCHs #1 to #3 are PDCCHs assigned to the same time resource. In other words, in the radio resource 1010, 3 PDCCHs are simultaneously transmitted from the femto base station apparatus 210.

The radio resource 1020 depicted in FIG. 10-1 includes areas of PDCCHs #A to #C, and a PDSCH. Since the femto base station apparatus 210 is near the macro base station apparatus 230, the downlink signal of the femto base station apparatus 210 is subject to interference from the downlink signal of the macro base station apparatus 230.

### (Downlink victim interference after lowering of upper limit of simultaneous-transmission count)

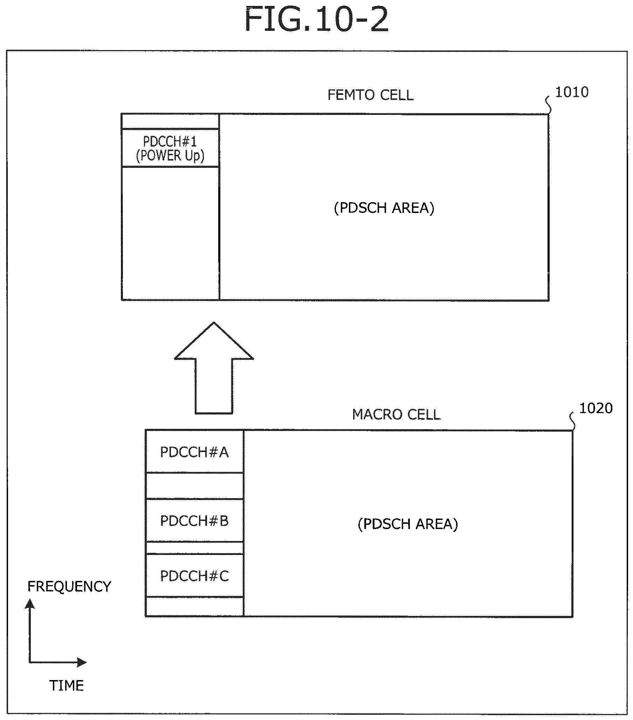

FIG. 10-2 is a diagram depicting an example of downlink victim interference after lowering of the upper limit of the simultaneous-transmission count. In FIG. 10-2, portions identical to those depicted in FIG. 10-1 are given the same reference numerals used in FIG. 10-1 and description thereof is omitted hereinafter. In the state depicted in FIG. 10-1, the femto base station apparatus 210, upon determining that the femto base station apparatus 210 is near the macro base station apparatus 230 and that the PDCCH communication quality is low, lowers the upper limit of the simultaneous-transmission count for the PDCCHs and performs scheduling.

For example, the femto base station apparatus 210 is assumed to lower the upper limit of the simultaneous-transmission count for the PDCCHs to 1. As a result, for example, as indicated by the radio resource 1010 depicted in FIG. 10-2, the radio resource 1010 of the downlink signal of the femto base station apparatus 210 is assumed to be assigned PDCCH#1 only. Thus, compared to the state depicted in FIG. 10-1, where 3 PDCCHs are assigned to the radio resource 1010, the transmission power of PDCCH #1 can be raised (power Up).

Consequently, the effect of the interference from downlink signals of the macro base station apparatus 230, on downlink signals of the femto base station apparatus 210 can be reduced. The amount of increased transmission power, for example, can be determined according to an available CCE count in a state where the upper limit of the simultaneous-transmission count of the PDCCHs has been lowered.

### (Downlink source interference before lowering of upper limit of simultaneous-transmission count)

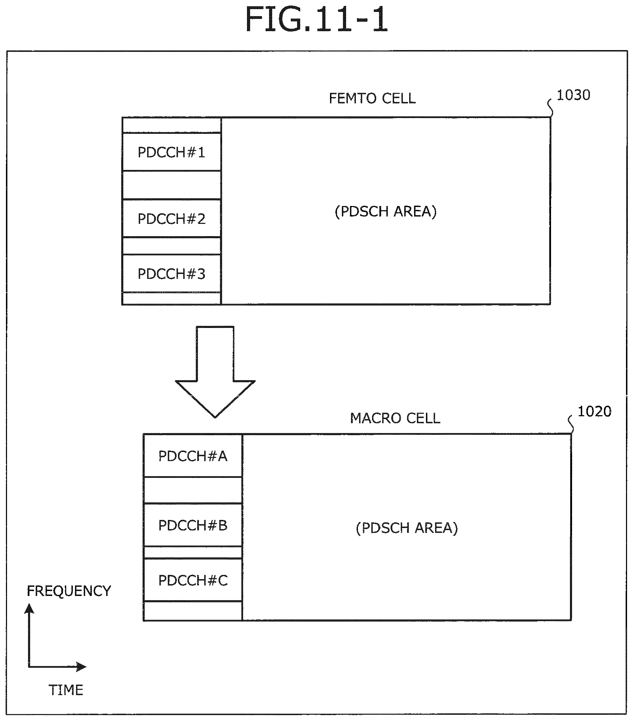

FIG. 11-1 is a diagram depicting an example of downlink source interference before lowering of the upper limit of the simultaneous-transmission count. In FIG. 11-1, portions identical to those depicted in FIG. 10-1 are given the same reference numerals used in FIG. 10-1 and description thereof is omitted hereinafter. A radio resource 1030 (femto cell) represents a radio resource of a downlink signal of the femto base station apparatus 220. The femto base station apparatus 220 is far from the macro base station apparatus 230 and the downlink signal of the femto base station apparatus 220 causes interference with respect to a downlink signal of the macro base station apparatus 230.

### (Downlink source interference after lowering of upper limit of simultaneous-transmission count)

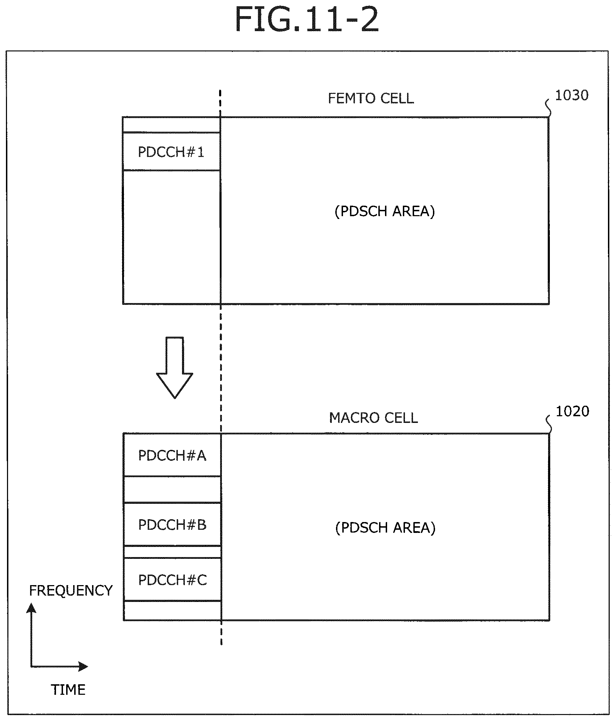

FIG. 11-2 is a diagram depicting an example of downlink source interference after lowering of the upper limit of the simultaneous-transmission count. In FIG. 11-2, portions identical to those depicted in FIG. 11-1 are given the same reference numerals used in FIG. 1-1 and description thereof is omitted hereinafter.

In the state depicted in FIG. 11-1, the femto base station apparatus 220 is assumed to determine that the femto base station apparatus 220 is far from the macro base station apparatus 230. Further, the femto base station apparatus 220 is assumed to determine that the macro cell connected terminal device 231, which is not connected to the femto base station apparatus 220 is near the femto base station apparatus 220. In this case, the femto base station apparatus 220 lowers the upper limit of the simultaneous-transmission count for the PDCCHs and performs scheduling.

For example, the femto base station apparatus 220 is assumed to lower the upper limit of the simultaneous-transmission count for the PDCCHs to 1. As a result, for example, as indicated by the radio resource 1030 depicted in FIG. 11-2, the radio resource 1030 of the downlink signal of the femto base station apparatus 220 is assumed to be assigned PDCCH #1 only.

Further, the femto base station apparatus 220 synchronizes the PDCCH transmission timing in the radio resource 1030 with the PDCCH transmission timing in the radio resource 1020 of the macro base station apparatus 230.

Thus, compared to the state depicted in FIG. 11-1, the amount of downlink interference from the PDCCH and PDSCH areas included in the radio resource 1030, received by the PDCCHs in the radio resource 1020 can be reduced. Consequently, the effect of the interference from downlink signals of the femto base station apparatus 220, on downlink signals of the macro base station apparatus 230 can be reduced.

Thus, according to the embodiment, when the femto base station apparatus 210 and the macro base station apparatus 230 are close to one another, the upper limit count of the PDCCHs simultaneously transmitted by the femto base station apparatus 210 is reduced, enabling the PDCCH transmission power to be raised. Consequently, the effect of interference from the macro base station apparatus 230, on the PDCCHs from the femto base station apparatus 210 can be reduced. As a result, drops in the communication quality between the femto base station apparatus 210 and the femto cell connected terminal device 211 can be suppressed.

When the femto base station apparatus 220 is far from the macro base station apparatus 230, the upper limit count of the PDCCHs simultaneously transmitted by the femto base station apparatus 220 can be reduced. Thus, the control channels simultaneously transmitted by the femto base station apparatus 220 are decreased, enabling the frequency of collisions of the PDCCHs of the femto base station apparatus 220 with the PDCCHs of the macro base station apparatus 230 can be reduced. As a result, drops in the communication quality between the macro base station apparatus 230 and the macro cell connected terminal device 231 can be suppressed.

Further, when the femto base station apparatus 220 is far from the macro base station apparatus 230, the PDCCH transmission timing can be synchronized with that of the macro base station apparatus 230. Thus, collisions of a PDSCH from the femto base station apparatus 220 with the PDCCHs from the macro base station apparatus 230 can be prevented. As a result, drops in the communication quality between the macro base station apparatus 230 and the macro cell connected terminal device 231 can be suppressed.

As described, the base station apparatus, the communications method, and the terminal device enable drops in communication quality to be suppressed.

### EXPLANATIONS OF LETTERS OR NUMERALS

101 to 103, 420 terminal device
110, 120 base station apparatus
111 obtaining unit
112 configuring unit
113 communications unit
200 communications system
210, 220, 410 femto base station apparatus
210a, 220a femto cell
211, 221 femto cell connected terminal device
222, 232 interference
230 macro base station apparatus
230a macro cell
231 macro cell connected terminal device
300 format
411, 421 wireless transceiving unit
412, 422 call process control unit
413, 423, 513, 523 baseband processing unit
414 scheduler
415 adjacent cell distance determining unit
416 interference-victim/interference-source determining unit
417 downlink-control-channel synchronized transmission count determining unit
424 application processing unit
510, 520 bus
511, 521 antenna
512, 522 RF unit
514 external signal I/F
515, 525 CPU
516, 526 memory
524 user interface
1010, 1020 radio resource

## Claims

1. A base station apparatus (110) capable of simultaneously transmitting a plurality of control channels by frequency division multiplexing, the base station apparatus (110) comprising:
an obtaining unit (111) that obtains distance information indicating a distance between the base station apparatus (110) and another base station apparatus (120);
a configuring unit (112) that based on the distance indicated by the distance information obtained by the obtaining unit (111), configures an upper limit count for the plurality of control channels to be transmitted simultaneously to terminal devices (101, 102) connected to the base station apparatus (110); and
a communications unit (113) that based on the upper limit count configured by the configuring unit (112), transmits the plurality of control channels to the terminal device (101, 102).

2. The base station apparatus (110) according to claim 1, wherein
the configuring unit (112) configures the upper limit count as a first upper limit count, when the distance is a given value or greater, and configures the upper limit count as a second upper limit count that is less than the first upper limit count, when the distance is less than the given value.

3. The base station apparatus (110) according to claim 2, wherein
the obtaining unit (111) obtains quality information that indicates communication quality of a control signal transmitted from the base station apparatus (110) to the terminal device (101, 102) connected to the base station apparatus (110),
the configuring unit (112) configures the upper limit count as the first upper limit count, when the distance is less than the given value and the communication quality indicated by the quality information obtained by the obtaining unit (111) is a threshold or greater.

4. The base station apparatus (110) according to claim 2 or 3, wherein
the configuring unit (112) configures the upper limit count as a third upper limit count that is less than the first upper limit count, when the distance is greater than or equal to a second given value that is greater than the given value.

5. The base station apparatus (110) according to claim 4, wherein
the communications unit (113) synchronizes transmission timing of the plurality of control channels with control channels from the other base station apparatus (120), when the distance is the second given value or greater.

6. The base station apparatus (110) according to claim 4 or 5, wherein
the obtaining unit (111) obtains interference information that indicates interference level of uplink to the base station apparatus (110),
the configuring unit (112) configures the upper limit count as the first upper limit count, when the distance is the second given value or greater and the interference level indicated by the interference information obtained by the obtaining unit (111) is a given level or less.

7. The base station apparatus (110) according to any one of claims 1 to 6, wherein
the communications unit (113) controls transmission power of the plurality of control channels such that total transmission power of the plurality of control channels simultaneously transmitted is a given power or less.

8. The base station apparatus (110) according to any one of claims 1 to 7, wherein
the distance information is information based on reception of a signal from the other base station apparatus (120) by the base station apparatus (110).

9. The base station apparatus (110) according to any one claims 1 to 7, wherein
the distance information is information based on reception of signals from the base station apparatus (110) and the other base station apparatus (120), by the terminal device (101, 102) connected to the base station apparatus (110).

10. The base station apparatus (110) according to claim 3, wherein
the communication quality is signal to interference and noise ratio (SINR).

11. A communications method executed by a base station apparatus (110) capable of simultaneously transmitting a plurality of control channels by frequency division multiplexing, the communications method comprising:
obtaining distance information indicating a distance between the base station apparatus (110) and another base station apparatus (120);
configuring based on the distance indicated by the obtained distance information, an upper limit count for the plurality of control channels to be transmitted simultaneously to terminal devices (101, 102) connected to the base station apparatus (110); and
transmitting the plurality of control channels to the terminal device (101, 102), based on the configured upper limit count.

## Patentansprüche

1. Basisstationsvorrichtung (110), die in der Lage ist, simultan eine Vielzahl von Steuerkanälen durch Frequenzmultiplexverfahren zu übertragen, wobei die Basisstationsvorrichtung (110) umfasst:
eine erhaltende Einheit (111), die Distanzinformationen erhält, die eine Distanz zwischen der Basisstationsvorrichtung (110) und einer anderen Basisstationsvorrichtung (120) angeben;
eine konfigurierende Einheit (112), die basierend auf der Distanz, die durch die Distanzinformationen angegeben wird, die durch die erhaltende Einheit (111) erhalten wurden, einen Obergrenzenzählwert für die Vielzahl der Steuerkanäle konfiguriert, die simultan an Endgeräte (101, 102) zu übertragen sind, die mit der Basisstationsvorrichtung (110) verbunden sind; und
eine Kommunikationseinheit (113), die basierend auf dem Obergrenzenzählwert, der durch die konfigurierende Einheit (112) konfiguriert wurde, die Vielzahl der Steuerkanäle an das Endgerät (101, 102) überträgt.

2. Basisstationsvorrichtung (110) nach Anspruch 1, wobei
die konfigurierende Einheit (112) den Obergrenzenzählwert als ersten Obergrenzenzählwert konfiguriert, wenn die Distanz einen gegebenen Wert hat oder darüber liegt, und den Obergrenzenzählwert als zweiten Obergrenzenzählwert konfiguriert, der kleiner als der erste Obergrenzenzählwert ist, wenn die Distanz kleiner als der gegebene Wert ist.

3. Basisstationsvorrichtung (110) nach Anspruch 2, wobei
die erhaltende Einheit (111) Qualitätsinformationen erhält, die die Kommunikationsqualität eines Steuersignals angeben, das von der Basisstationsvorrichtung (110) an das Endgerät (101, 102) übertragen wird, das mit der Basisstationsvorrichtung (110) verbunden ist,
die konfigurierende Einheit (112) den Obergrenzenzählwert als den ersten Obergrenzenzählwert konfiguriert, wenn die Distanz kleiner als der gegebene Wert ist, und die Kommunikationsqualität, die durch die Qualitätsinformationen angegeben wird, die durch die erhaltende Einheit (111) erhalten werden, auf einem Schwellenwert ist oder darüber liegt.

4. Basisstationsvorrichtung (110) nach Anspruch 2 oder 3, wobei
die konfigurierende Einheit (112) den Obergrenzenzählwert als dritten Obergrenzenzählwert konfiguriert, der kleiner als ein erster Obergrenzenzählwert ist, wenn die Distanz größer als oder gleich einem zweiten gegebenen Wert ist, der größer als der gegebene Wert ist.

5. Basisstationsvorrichtung (110) nach Anspruch 4, wobei
die Kommunikationseinheit (113) Übertragungszeitgebung der Vielzahl von Steuerkanälen mit Steuerkanälen von der anderen Basisstationsvorrichtung (120) synchronisiert, wenn die Distanz der zweite gegebene Wert ist oder darüber liegt.

6. Basisstationsvorrichtung (110) nach Anspruch 4 oder 5, wobei
die erhaltende Einheit (111) Interferenzinformationen erhält, die Interferenzpegel des Uplinks zu der Basisstationsvorrichtung (110) angeben,
die konfigurierende Einheit (112) den Obergrenzenzählwert als den ersten Obergrenzenzählwert konfiguriert, wenn die Distanz der zweite gegebene Wert ist oder darüber liegt, und der Interferenzpegel, der durch die Interferenzinformationen angegeben wird, die durch die erhaltende Einheit (111) erhalten werden, auf einem gegebenen Pegel ist oder darunter liegt.

7. Basisstationsvorrichtung (110) nach einem der Ansprüche 1 bis 6, wobei die Kommunikationseinheit (113) die Übertragungsleistung der Vielzahl von Steuerkanälen so steuert, dass die Gesamtübertragungsleistung der Vielzahl von Steuerkanälen, die simultan übertragen werden, eine gegebene Leistung ist oder darunter liegt.

8. Basisstationsvorrichtung (110) nach einem der Ansprüche 1 bis 7, wobei die Distanzinformationen Informationen sind, die auf dem Empfang eines Signals von der anderen Basisstationsvorrichtung (120) durch die Basisstationsvorrichtung (110) basieren.

9. Basisstationsvorrichtung (110) nach einem der Ansprüche 1 bis 7, wobei die Distanzinformationen Informationen sind, die auf dem Empfang von Signalen von der Basisstationsvorrichtung (110) und der anderen Basisstationsvorrichtung (120) durch das Endgerät (101, 102) basieren, das mit der Basisstationsvorrichtung (110) verbunden ist.

10. Basisstationsvorrichtung (110) nach Anspruch 3, wobei
die Kommunikationsqualität das Verhältnis von Signal zu Interferenz und Rauschen (SINR) ist.

11. Kommunikationsverfahren, das von einer Basisstationsvorrichtung (110) ausgeführt wird, die in der Lage ist, simultan eine Vielzahl von Steuerkanälen durch Frequenzmultiplexverfahren zu übertragen, wobei das Kommunikationsverfahren umfasst:
Erhalten von Distanzinformationen, die eine Distanz zwischen der Basisstationsvorrichtung (110) und einer anderen Basisstationsvorrichtung (120) angeben;
Konfigurieren eines Obergrenzenzählwert für die Vielzahl der Steuerkanäle, die simultan an Endgeräte (101, 102) zu übertragen sind, die mit der Basisstationsvorrichtung (110) verbunden sind, basierend auf der Distanz, die durch die erhaltenen Distanzinformationen angegeben wird, und
Übertragen der Vielzahl von Steuerkanälen an das Endgerät (101, 102) basierend auf dem konfigurierten Obergrenzenzählwert.

## Revendications

1. Appareil de station de base (110) capable de transmettre simultanément une pluralité de canaux de commande par multiplexage par répartition en fréquence, l'appareil de station de base (110) comprenant :
une unité d'obtention (111) qui obtient des informations de distance indiquant une distance entre l'appareil de station de base (110) et un autre appareil de station de base (120) ;
une unité de configuration (112) qui, sur la base de la distance indiquée par les informations de distance obtenues par l'unité d'obtention (111), configure un compte de limite supérieure pour la pluralité de canaux de commande à transmettre simultanément à des dispositifs terminaux (101, 102) connectés à l'appareil de station de base (110) ; et
une unité de communication (113) qui, sur la base du compte de limite supérieure configuré par l'unité de configuration (112), transmet la pluralité de canaux de commande au dispositif terminal (101, 102).

2. Appareil de station de base (110) selon la revendication 1, dans lequel
l'unité de configuration (112) configure le compte de limite supérieure en tant que premier compte de limite supérieure, lorsque la distance est une valeur donnée ou plus, et configure le compte de limite supérieure en tant que deuxième compte de limite supérieure qui est inférieure au premier compte de limite supérieure, lorsque la distance est inférieure à la valeur donnée.

3. Appareil de station de base (110) selon la revendication 2, dans lequel
l'unité d'obtention (111) obtient des informations de qualité qui indiquent une qualité de communication d'un signal de commande transmis depuis l'appareil de station de base (110) vers le dispositif terminal (101, 102) connecté à l'appareil de station de base (110),
l'unité de configuration (112) configure le compte de limite supérieure en tant que premier compte de limite supérieure, lorsque la distance est inférieure à la valeur donnée et la qualité de communication indiquée par les informations de qualité obtenues par l'unité d'obtention (111) est un seuil ou plus.

4. Appareil de station de base (110) selon la revendication 2 ou 3, dans lequel
l'unité de configuration (112) configure le compte de limite supérieure en tant que troisième compte de limite supérieure qui est inférieur au premier compte de limite supérieure, lorsque la distance est supérieure ou égale à une seconde valeur donnée qui est supérieure à la valeur donnée.

5. Appareil de station de base (110) selon la revendication 4, dans lequel
l'unité de communication (113) synchronise un cadencement de transmission de la pluralité de canaux de commande avec des canaux de commande provenant de l'autre appareil de station de base (120), lorsque la distance est la seconde valeur donnée ou plus.

6. Appareil de station de base (110) selon la revendication 4 ou 5, dans lequel
l'unité d'obtention (111) obtient des informations d'interférence qui indiquent un niveau d'interférence de la liaison montante vers l'appareil de station de base (110),
l'unité de configuration (112) configure le compte de limite supérieure en tant que premier compte de limite supérieure, lorsque la distance est la seconde valeur donnée ou plus et le niveau d'interférence indiqué par les informations d'interférence obtenues par l'unité d'obtention (111) est un niveau donné ou moins.

7. Appareil de station de base (110) selon l'une quelconque des revendications 1 à 6, dans lequel
l'unité de communication (113) commande une puissance de transmission de la pluralité de canaux de commande de telle sorte qu'une puissance de transmission totale de la pluralité de canaux de commande transmis simultanément est une puissance donnée ou moins.

8. Appareil de station de base (110) selon l'une quelconque des revendications 1 à 7, dans lequel
les informations de distance sont des informations basées sur la réception d'un signal provenant de l'autre appareil de station de base (120) par l'appareil de station de base (110).

9. Appareil de station de base (110) selon l'une quelconque revendications 1 à 7, dans lequel
les informations de distance sont des informations basées sur la réception de signaux provenant de l'appareil de station de base (110) et de l'autre appareil de station de base (120), par le dispositif terminal (101, 102) connecté à l'appareil de station de base (110).

10. Appareil de station de base (110) selon la revendication 3, dans lequel
la qualité de communication est le rapport signal sur interférence et bruit (SINR).

11. Procédé de communication exécuté par un appareil de station de base (110) capable de transmettre simultanément une pluralité de canaux de commande par multiplexage par répartition en fréquence, le procédé de communication comprenant les étapes consistant à :
obtenir des informations de distance indiquant une distance entre l'appareil de station de base (110) et un autre appareil de station de base (120) ;
configurer sur la base de la distance indiquée par les informations de distance obtenues, un compte de limite supérieure pour la pluralité de canaux de commande à transmettre simultanément à des dispositifs terminaux (101, 102) connectés à l'appareil de station de base (110) ; et
transmettre la pluralité de canaux de commande au dispositif terminal (101, 102), sur la base du compte de limite supérieure configuré.
